# EUROPÄISCHE PATENTSCHRIFT

(11) **EP 1 777 200 B1**
(45) Veröffentlichungstag und Bekanntmachung des Hinweises auf die Patenterteilung: **04.11.2009**
(21) Anmeldenummer: 05022298.3
(22) Anmeldetag: 13.10.2005
(51) Int. Cl.: C02F 11/12, C02F 11/16, C02F 3/32, C02F 1/00

(54) **Verfahren und Vorrichtung zur Beschickung von Vererdungsanlagen mit Klärschlamm**
Process and apparatus for feeding sewage sludge into a plant for producing humus
Procéde et dispositif pour alimenter un dispositif de transformation des boues d'epuration en humus

(43) Veröffentlichungstag der Anmeldung: 25.04.2007
(73) Patentinhaber: Pauly, Udo, Dr., 37133 Friedland (DE)
(72) Erfinder: Pauly, Udo, Dr., 37133 Friedland (DE); Rehfus, Stefan, 37085 Göttingen (DE)
(74) Vertreter: Rehberg Hüppe + Partner

(56) Entgegenhaltungen:
- EP-A- 0 409 367
- WO-A-96/31441
- WO-A-03/076349
- US-A- 3 473 185

## Beschreibung

Die Erfindung betrifft ein Verfahren zur Beschickung von Vererdungsanlagen mit Klärschlamm, mit den Merkmalen des Oberbegriffs des Patentanspruchs 1 und eine Vererdungsanlage mit den Merkmalen des Oberbegriffs des Patentanspruchs 5.

### STAND DER TECHNIK

Die Ausbringung auf Vererdungsbeete stellt eine der effektivsten Verfahren der Entsorgung von Klärschlämmen dar. Sie ist z.B. bekannt aus DE 000019700434 C1 und DE 000029618763 U1 oder DE 000010039228 A1. Dabei wird in der Regel Klärschlamm mit hohem Feuchtigkeitsgehalt (ca. 99 - 96% Wassergehalt) auf in der Regel mit Schilf bepflanzte Vererdungsbeete ausgebracht, die bisher in beckenartigen Vertiefungen angelegt sind und über eine oder mehrere fest installierte Rohrleitungen beschickt werden. Die Effizienz dieses Verfahrens ist jedoch beschränkt, weil die Entwässerungskapazität einer derartigen Einrichtung naturgemäß begrenzt ist - bei üblichen Bemessungskriterien sind etwa 1 Quadratmeter Vererdungsfläche pro Kubikmeter Nassschlamm und Jahr erforderlich. Hoher Installationsaufwand und Flächenverbrauch stehen daher einer limitierten Verarbeitungskapazität gegenüber. Regenschutz würde zwar die Trocknungskapazität steigern, führt aber zu erheblich höheren finanziellen Aufwendungen pro Flächeneinheit, insbesondere bei geschlossenen Hallen, für die Be- und Entlüftungseinrichtungen erforderlich sind. Eine finanziell relevante Einschränkung der Kapazitätsnutzung resultiert auch aus dem Erfordernis von Teil-Stilllegungen bei der Räumung der Beete: Üblicherweise sind bei Vererdungsanlagen komplette Beetstilllegungen (Trockenphasen) über mehrere Monate erforderlich, anschließend wird geräumt. Für diese Trockenphasen ist eine Flächenreserve erforderlich, weil in diesen Zeiträumen die laufend zu entsorgende Schlammenge auf die im Betrieb verbleibenden Beete verteilt werden muss. Die Klärschlamm-Einleitung über Rohrsysteme und der flächenmäßigen Verteilung durch Fließen des Schlamms hat ferner den Nachteil, dass der tatsächliche Mengeneintrag pro Flächeneinheit nicht gleichmäßig erfolgt und nicht mit einfachen Methoden kontrollierbar ist. Eine Feinsteuerung der Systeme ist schon aus diesem Grunde nicht möglich. Die Leistung der Anlagen wird aber auch durch wachstumsgehemmte Pflanzen und -zonen sowie durch Bereiche mit Überwässerung verringert, die sich bei den bislang angewandten Techniken nur verhindern lassen, wenn eine zeitlich eng gesetzte betriebsbegleitende Betreuung der Anlage durch Fachpersonal erfolgt und zusätzliche Hilfsmaßnahmen wie das manuelle Abschiebern einzelner überlasteter Beetbereiche oder die Beschlammung unterlasteter Bereiche mittels manuell verlegbarer Schläuche ergriffen werden. Dies führt zu zusätzlichen Betriebsaufwendungen.

Ein Verfahren zur Beschickung von Vererdungsanlagen mit Klärschlamm mit den Merkmalen des Oberbegriffs des Patentanspruchs 1 und eine Vererdungsanlage mit den Merkmalen des Oberbegriffs des Patentanspruchs 6 sind aus der EP-A-1 180 499 A bekannt. Hier werden dem Klärschlamm, bevor er intervallweise von oben in das Vererdungsbecken eingebracht wird, Tonmineralien zugegeben. Weiterhin können dem Klärschlamm Kalk, Sand, Schluff, Gesteinsmehle, organische Stoffe mit hohem C:N-Verhältnis, Nährsalze, Säuren, Basen und/oder als Säuren oder Basen wirksame Stoffe zugegeben werden. Hiermit wird eine Konditionierung des Klärschlamms erreicht. Es geht es um eine Steigerung der Qualität der in der jeweiligen Vererdungsanlage gewonnenen Erde.

Aus der WO 03/076349 A2 sind ein Verfahren und eine Anlage zur Behandlung von Tierexkrementen bekannt. Dabei werden die Tierexkremente zusammen mit einem Material von pflanzlichem Ursprung in zerkleinerter Form in ein Becken eingebracht und.darin umgerührt und belüftet. Das Umrühren und Belüften erfolgt mit Werkzeugen, die an einem Laufwagen vorgesehen sind, der über die Breite des Beckens gegenüber einer sich über das Becken erstreckenden Brücke verschieblich ist. Die Brücke ist ihrerseits über längs des Beckens verschieblich. An der Brücke sind weiterhin Mittel für das Ausbringen der schlammförmigen Exkremente vorgesehen, die eine gegenüber der Brücke ortsfeste und sich über die Breite des Beckens erstreckende Austragsöffnung aufweisen.

### AUFGABE DER ERFINDUNG

Es ist die Aufgabe der vorliegenden Erfindung die Effizienz bei der Vererdung von Klärschlamm in Vererdungsbeeten wesentlich zu steigern, ohne dabei höhere investive Aufwendungen oder Betriebskosten zu verursachen.

### LÖSUNG

Die Aufgabe der Erfindung wird erfindungsgemäß durch ein Verfahren mit den Merkmalen des unabhängigen Patentanspruchs 1 und durch eine Vererdungsanlage mit den Merkmalen des unabhängigen Patentanspruchs 5 gelöst. Vorteilhafte Ausführungsformen des neuen Verfahrens und der neuen Vererdungsanlage sind in den abhängigen Ansprüchen definiert.

### BESCHREIBUNG DER ERFINDUNG

Indem der Klärschlamm eingedickt, vorentwässert bzw. durch Flockungsmittel konditioniert und über eine verfahrbare Traverse oder Brücke punktgenau am Wurzelraum der Pflanzen ausgebracht wird, erlaubt es die Erfindung, den Wirkungsgrad der Vererdung zu erhöhen, d.h. pro Flächeneinheit einen höheren Schlammdurchsatz zu realisieren. Gleichzeitig wird ein höherer Trocknungsgrad erreicht und damit die zu entsorgende Restmenge minimiert.

Zwar wird auch in bestehenden Anlagen angestrebt, die Effizienz zu steigern, indem mit möglichst geringem Wassergehalt des Ausgangsmaterials gearbeitet wird. Dies hat seine Grenze aber darin, dass entfeuchtetes Material weniger gut verfließt und daher ein feineres Raster der Verrohrung erforderlich wird - letztlich bleibt daher das Optimum bei den bislang bekannten Größenordnungen.

Im vorliegenden Ansatz wird jedoch die Verteilung nicht über ortsfeste Rohre wie z.B. in DE 202 14 573 U1 beschrieben vorgenommen, sondern über eine mobile Traverse bzw. Brücke, die ein Vererdungsbeet oder eine Gruppe von Vererdungsbeeten überspannt und vorzugsweise auf Fahrgestellen mit walzenförmigen Reifen oder Kettenantrieben, evtl. aber auch auf einem Schienensystem, verfahren wird. Die Brücke kann - muss aber nicht - begehbar sein. Der Ablauf des Trübwassers aus der Vorentwässerung des Klärschlamms kann in Entwässerungsgräben oder -rohren zwischen den Vererdungsbeeten erfolgen. Dabei können die Entwässerungsgräben so ausgeführt sein, dass sie gleichzeitig als Laufgräben für die Räder der verfahrbaren Brücke oder Traverse nutzbar sind.

Dabei wäre es nun möglich, den eingebrachten Klärschlamm aus einer kammartigen Anordnung von Auslässen über die Breite der Beete bzw. der Brücke oder Traverse zu verteilen, oder etwa mit einer Verteilschnecke über die Breite der Brücke und dann mit Auswurfmechanismen, wie sie etwa von Mistwagen bekannt sind, über das Feld zu verstreuen. Der Nachteil dieser Methode wäre jedoch, dass der Klärschlamm auch über die Pflanzenstände und ihr Blattwerk verteilt würde. Dies würde - abgesehen von negativen ästhetischen Aspekten - das Wachstum der Pflanzen beeinträchtigen und es wäre nicht möglich, einzelne Beetbereiche in Abhängigkeit ihres Wasser- und Nährstoffgehalts angepasst zu beschicken.

Bei der Erfindung wird daher ein von der Brücke oder Traverse mitgeführter Schleppschlauch als Beschickungseinrichtung verwendet, der kurz über dem Boden zwischen die Pflanzenstände geführt wird. Dabei kann sowohl ein einzelner als auch eine Gruppe von Schleppschläuchen zur Anwendung kommen. Die genaue Anzahl erforderlicher Schläuche orientiert sich u. a. an der Geometrie des zu beschlammenden Vererdungsbeetes. Bei Verwendung mehrerer Schläuche empfiehlt sich ein versetztes Mitführen, um eine möglichst lückenlose Beschlammung zu realisieren.

Bei einer besonders wartungsarmen und steuerungstechnisch gut regelbaren Variante des Verfahrens kann der Schleppschlauch sowohl in der Längsachse des Beetes (in Fahrrichtung der Brücke), als auch quer zur Fahrtrichtung mit Hilfe eines verfahrbaren Ausbringwagens mitgeführt werden. Der Vortrieb der Brücke und die Querverteilung sind dabei jeweils programmgesteuert - z.B. mit Hilfe von Schrittmotoren - präzise regelbar. Der Schlauch kann durch das vertikale Fahren der Brücke (entlang der Beetlänge) und bedarfsweise durch horizontalen Transport auf der Brücke (über die Beetbreite) jeden Quadratmeter Vererdungsfläche punktgenau beschlammen. Über eine Mengenmessung lassen sich genaue Beschickungsstatistiken führen. Die Steuerung in jede Bewegungsrichtung erfolgt automatisiert.

Statt einer Längsbewegung der Brücke bzw. Traverse über das Beet kann eine vorteilhafte Ausführungsform auch darin bestehen, die Traverse - analog zu einem schwenkbaren Kranausleger - um eine Drehachse zu bewegen. Diese Ausführungsform hat den Vorteil, dass eine ortsfeste Installation der drehbaren Traverse erfolgen kann, wodurch sich die Schlammzuführung zur Traverse, die z.B. in der Drehachse oder parallel zur Drehachse erfolgen kann, vereinfacht. Durch die Drehung um die Drehachse und die gleichzeitige Möglichkeit, den Schleppschlauch auf der vollen Länge der Traverse mittels eines Ausbringwagens zu verfahren, kann jeder Punkt innerhalb des von der Traverse überspannten Radius beschlammt werden. Sinnvollerweise wird die Lage der Drehachse und die Länge der Traverse so auf die Beetgeometrie abgestimmt, dass jeder Punkt beschlammbar ist. Auch in dieser Variante bietet sich eine separate Ansteuerung sowohl der Drehbewegung als auch der Bewegung des Ausbringwagens auf der Traverse an, die z.B. mittels Schrittmotoren, über Getriebe o.ä. erfolgen kann.

Darüber hinaus kann es vorteilhaft sein, für eine Feinregulierung des aufgebrachten Schlamms den Auslass des Schleppschlauchs zusätzlich mittels eines Hand- oder Motorschiebers regulieren zu können. Auch hier ist z.B. bei Verwendung eines Motorschiebers eine weitestgehende Automatisierung möglich, wenn z.B. die Schrittgeschwindigkeit der Brücke, der Durchlass des Motorschiebers und die über magnetisch-induktive Durchflussmessung bestimmte Durchsatzleistung der z.B. über einen Frequenzumformer regelbaren Klärschlammpumpe miteinander rückgekoppelt sind. Dadurch ist eine besonders schonende Beschlammung der Beetoberfläche möglich, bei der auch die Fließeigenschaften (Viskosität) des Schlamms je nach Eindickungs- bzw. Entwässerungsgrad berücksichtigt werden können. Bei Einsatz von Flockungsmitteln zur Konditionierung des Schlamms kann als weitere Regelgröße z.B. das Flockenbild verwendet werden, das in modernen Misch- und Dosieranlagen bereits opto-elektronisch erfasst und ausgewertet werden kann, um die Flockungsmittelzugabe zu effektivieren.

Bisherige Erfahrungen zeigen, dass sich die z.B. in einer Woche auf einer Kläranlage von 20.000 Einwohnergleichwerten anfallende Schlammmenge dann durch zwei- bis dreimaligen horizontalen Transport des Schlauchs über die vertikal fahrende Brücke auf einem ca. 10 - 15 m breiten Streifen des Vererdungsbeets verteilen lässt, d.h. bis zu einem vollständigen Durchlauf des Beetes (z. B. 100 m Beetlänge) vergehen z. B. 6 - 10 Wochen. Diese Zeit kann noch entsprechend gestreckt werden bei zwei oder mehr Beeten, die im Wechsel betrieben werden. Dies bedeutet, dass jede Schlammlage je nach Anlagenkonfiguration (Beetgröße, Fahrgeschwindigkeit, Beetanzahl) 6 Monate oder mehr Zeit hat, bis zur nächsten Beschickung abzutrocknen. Dadurch sollten bereits im laufenden Betrieb der Vererdungsanlage Trockensubstanzgehalte des in den Beeten lagernden Klärschlamms von mindestens 20 - 30 % erzielt werden, die sich während der Trockenzeiten noch beträchtlich erhöhen können.

Mit der fahrbaren Traverse kann parallel zur Beschickungseinrichtung, z. B. am Ausbringwagen, eine Aufnahme- bzw. Befestigungsmöglichkeit (Container, Box, Klemmvorrichtung, Greifarm o. ä.) mitgeführt werden, die dazu dient, Gerätschaften aufzunehmen, die für Sonderaufgaben auf dem Vererdungsbeet eingesetzt werden. Mitgeführt werden können u. a. verschiedene Messgeräte und ein Kamerasystem zur optischen Überwachung des Pflanzenbestands sein. Mit dem Kamera- und Sensorensystem kann das zu beschickende Kleinareal bei angemessenem Vorlauf vor oder während der jeweiligen Positionierung des Schleppschlauches gemessen werden. So können Bereiche mit geschädigten oder wachstumsgehemmten Pflanzen geschont oder stärker beschlammt werden.

Erfassungssysteme für Pflanzenwachstum sind z.B. als DMI (Digital Multispektrum-Imager, Verfahren der NASA), die mit schmalbandigen optischer Filterung im Bereich von 695 und 840 nm arbeiten, der Laser-Floureszenzanalyse (der DLR), oder der Infrarot-Falschfarbenanalyse (des Instituts für Pflanzenbau der Uni Kiel) bekannt. Verfahren zur Messung von Bodentemperatur mit IR-Reflektometer und zur Erfassung des Wassergehalts mittels z.B. TDR-Sonden (time domain reflectory-Sonden) sind dagegen mittlerweile handelsüblich. Mittels TDR-Sonden kann z.B. der Feuchtegehalt des zuvor aufgebrachten Klärschlamms bestimmt werden, was als Entscheidungsgrundlage dafür dienen kann, ob der Klärschlamm für eine erneute Beschickung bereits ausreichend abgetrocknet ist oder zunächst besser abgetrocknete Areale beschlammt werden sollen.

Durch eine Abstandsmessung (z.B. mittels optischer oder akustischer Methoden wie Ultraschall) kann zudem die Höhe des aufgelandeten Klärschlamms gemessen werden, so dass sich regelmäßig die Befüllhöhen des Beetes erfassen lassen. Zusammen mit Angaben über die Beschlammungsmengen (bestimmt z.B. über magnetisch-induktive Durchflussmessung) lassen sich Auswertungen über den Vererdungserfolg wie Volumenreduktion, erreichter Trocknungsgrad etc. anfertigen.

Weitere Gerätschaften, die sinnvoller Weise befestigt und mitgeführt werden können, sind z.B. ein Probennehmer oder eine Dosiereinrichtung für Zuschlagstoffe (z.B. Chemikalien). Dadurch sind punktuelle Schädigungen durch irreguläre pH-Werte, Schädlingsbefall etc. sowohl erkennbar als auch durch gezielt dosierbare Zuschlagstoffe kompensierbar. Möglich ist auch die gezielte Düngung bestimmter Areale (z.B. über Blattdüngung) oder das Versprühen von Schädlings- oder Unkrautvernichtungsmitteln.

Das Aufbringen dieser Substanzen kann wie beschrieben separat erfolgen, alternativ ist aber auch die Einmischung in den Schlammstrom möglich, entweder über eine separate Dosierstation für Additive, oder als Zumischung in die zur Verwendung kommenden Flockungsmittel.

Andere sinnvolle Anwendungsformen für mitgeführte bzw. an die Traverse anzubringende Gerätschaften sind z.B. Dresch-/Sammeleinrichtungen für die Ernte von Saatgut oder ein Schneidwerkzeug zur Mahd des Pflanzenbestands.

Durch die Möglichkeit, an der fahrbaren Traverse die beschriebenen Gerätschaften mitzuführen, entfällt ein zusätzliches Problem konventioneller Vererdungsanlagen, nämlich die Schwierigkeit, im laufenden Betrieb einer Anlage bestimmte Areale für eine Probenahme, Anlagenpflege etc. betreten bzw. erreichen zu können. In der Regel ist eine konventionelle Klärschlammvererdungsanlage bereits nach wenigen Monaten Betrieb aufgrund des abgelagerten Klärschlamms nicht mehr begehungsfähig, so dass Probenahmen lediglich aus Randbereichen möglich sind, und eine vollflächige, lückenlose Erfassung des Pflanzenbestands z.B. nur durch Luftaufnahmen möglich ist.

Eine Protokollierung des Vor-Zustandes und der eingebrachten Schlamm- und Wassermengen sowie Zusatzstoffe (analog zur landwirtschaftlichen Schlagkartierung) gekoppelt mit einer kontinuierlichen Auswertung der Ergebnisse ermöglichen es weiter, die Betriebsparameter des Systems laufend zu verfeinern, um den Materialumsatz zu optimieren.

Ein entscheidender Vorteil des Systems liegt ferner in der dynamischen Beschickung und Räumung: Beete können im laufenden Betrieb geräumt werden, z.B. sind auch Teilräumungen oder sukzessive Räumungen aus einem Beet möglich (die Brücke fährt dann einfach nicht im trockengelegten, zu räumenden Bereich). Allein hierdurch ist eine Kapazitätssteigerung um ca. 30 % erzielbar, denn beim erfindungsgemäßen Verfahren sind auch Ein- oder Zweibeetvarianten möglich. Unmittelbar vor einer Räumung kann außerdem durch einen von der Traverse gezogenen bzw. mitgeführten Pflug oder Wendewolf eine Umwälzung/Umlagerung des im Beet lagernden Klärschlamms erfolgen, so dass eine weitere Trocknung des Materials vor der Räumung erreicht wird.

Desweiteren ist es auch möglich, Anlagen dynamisch einzusetzen, d.h. bei zunehmendem Bedarf zusätzliche Beete und Felder anzulegen und mit einer bestehenden Traverse oder Brücke mit zu beschicken, oder auch stillzulegen, ohne wie bei konventionellen Systemen Verrohrung und Pumpen für neue Beete und Felder kostenintensiv einbauen und zum Erhalt der Funktionsfähigkeit laufend warten zu müssen. Realisierbar ist dadurch z.B. auch die Anlage eines einzelnen großen Beetes, das von der Traverse oder Brücke in Spuren beschlammt wird. Durch das erfindungsgemäße Verfahren sind wesentlich größere Beetabmessungen realisierbar. Waren bisherige Vererdungsbeete in ihrer Geometrie durch die Fließeigenschaften des Schlamms in Abhängigkeit von der Lage und Anzahl der Schlamm-Auslaufbauwerke charakterisiert, entfällt diese wirtschaftlich und technisch relevante Einschränkung nun, da die zurückgelegte Strecke für die fahrbare Brücke keine Rolle spielt. Aus statischen Gründen empfiehlt sich zwar bei Einsatz einer einzigen fahrbaren Brücke der Einsatz einer Beetgeometrie mit einem großen Längen : Breiten-Verhältnis. Bei Einsatz mehrerer parallel betriebener oder versetzbarer Brücken sind allerdings auch beliebige Geometrien eines einzigen, großen Vererdungsbeetes realisierbar. Den Beetabmessungen sind insofern keine Grenzen gesetzt.

Dadurch reduziert sich der Aufwand für den Bau der Beetbegrenzungen (Erddämme) wesentlich. Bei einer konventionellen 3-Beetanlage mit einer Nettovererdungsfläche von 7.500 m² beträgt die erforderliche Bruttoanlagenfläche aufgrund der Umwallung und Mitteldämme zwischen den Beeten z.B. 12.000 m². Bei einer durch das erfindungsgemäße Verfahren möglichen 1-Beetanlage gleicher Nettovererdungsfläche lässt sich die für die Umwallung erforderliche Fläche um ca. 1.200 m² reduzieren, was neben verringerten Baukosten einem Minderbedarf an zu erwerbender Grundfläche von rd. 10 % entspricht. Weitere wirtschaftliche Vorteile ergeben sich daraus, dass mit dem innovativen Verfahren auf gleicher Nettovererdungsfläche eine um mindestens 30% größere Schlammenge behandelt werden kann.

Ein weiterer Vorteil des Systems ist, dass die Brücke gleichzeitig als Regenschutz ausgeführt sein kann und durch ein geeignetes Verfahren der Brücke und eine Steuerung der Ausbringung witterungsbedingte Unterschiede kompensieren kann - dies um so mehr, je grossflächiger der Regenschutz ausgelegt ist. Denkbar ist zudem der Einsatz variabler Zeltdächer, z.B. in Form von Rollmarkisen, die über der verfahrbaren Brücke angebracht sind. Sie können auch als Mehrfachsystem, z.B. mit transparenten und reflektierenden Folienmaterialien in verschiedenen Ebenen, ausgestattet sein, um neben dem Niederschlag auch die Wärmeeinstrahlung begrenzen zu können. Die Wasserabführung der Überdachung kann z.B. über Dachrinnen oder -schläuche erfolgen, die das Regenwasser in das Drainagesystem der Vererdungsanlage, in den Trübwassergraben der Schlammentwässerung oder in ein separates Gerinne zur Versickerung außerhalb der Vererdungsanlage einleiten.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand von Verfahrensbeispielen und von zwei in den Figuren dargestellter bevorzugter Ausführungsbeispiele der neuen Vorrichtung weiter erläutert und beschrieben.
- **Fig. 1**: zeigt eine erste Ausführungsform der neuen Vorrichtung zur Durchführung des neuen Verfahrens in einer Seitenansicht; und
- **Fig. 2**: zeigt eine zweite Ausführungsform der neuen Vorrichtung zur Durchführung des neuen Verfahrens in einer Ansicht von oben.

### VERFAHRENSBEISPIELE

Ein zur Verwendung kommende Klärschlamm wird zunächst stark eingedickt. Dies kann z.B. durch eine statische Eindickung, ggf. mit Unterstützung von Flockungshilfsmitteln, mit Trübwasserabzug erfolgen: Besonders effektiv ist es, den Nassschlamm über eine Flockungsmittel-Dosierstation zu leiten, ähnlich wie dies auch für eine maschinelle Überschussschlammeindickung erforderlich ist. Der Dickschlamm mit einem Trockensubstanzgehalt von >5 % wird mit geeigneten Dickschlammpumpen, wie sie dem Fachmann z.B. als Beton- oder Putz-Förderpumpen bekannt sind, und über Schlauchrollen oder durch Schläuche, die auf Gleitketten geeigneter Radien geführt werden, zu einer Verteilbrücke transportiert.

Es ist aber auch möglich, den wässrigen Ausgangsschlamm zur Verteilbrücke zu pumpen, dort über o.g. Fälleinrichtungen und evtl. Rotationssiebe zu entwässern und dann auf das Vererdungsbeet zu leiten. Dabei kann der Trübwasserabzug in Drainagekanälen abgeleitet werden, die in Kombination auch als Fahrbereiche der Ausbringbrücke dienen.

### FIGURENBESCHREIBUNG

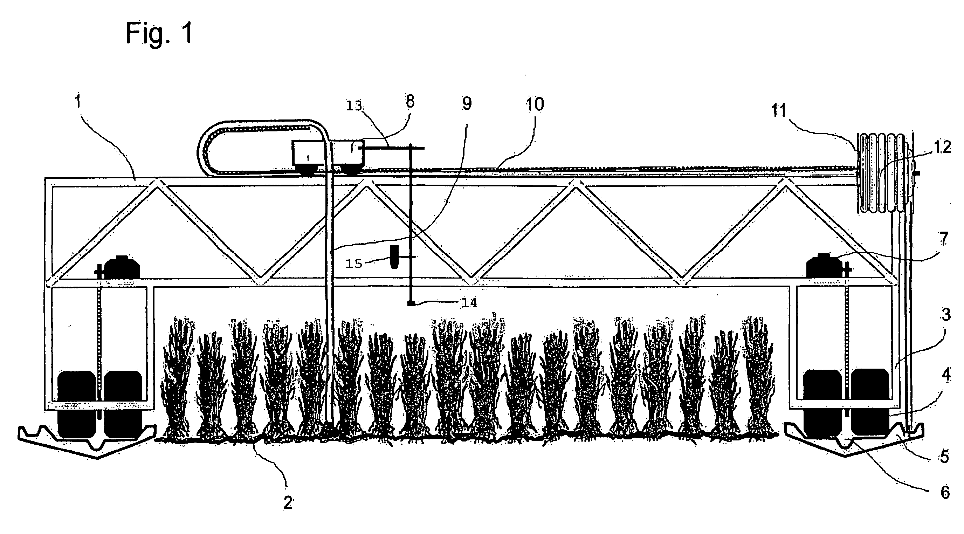

**Fig. 1** zeigt eine verfahrbare Brücke 1, die z.B: aus leichtem Holzfachwerk oder einer Metallkonstruktion in Leichtbauweise hergestellt ist. Die Brücke 1 überspannt ein Vererdungsbeet 2 und weist Fahrschemel 3 mit den Rädern 4 in einer Laufmulde 5, die auch einen Drainagegraben für die Trübwasserableitung 6 enthält, in Längsrichtung des Vererdungsbeets 2 verfahrbar (denkbar ist aber auch die Verfahrbarkeit in beliebige Kurven größerer Radien). Statt mit Rädern kann die Brücke auch mittels Gleisketten oder auf Schienen verfahrbar sein, möglich ist aber auch ein Zahnradantrieb. Antrieb und Steuerung können in jedem Fall mit Hilfe von Schrittmotoren 7 erfolgen.

Die Zuführung eines zuvor eingedickten Schlamms zu der Brücke 1 erfolgt mittels einer Dickschlammfördereinrichtung (z.B. einer Schnecken- oder Drehkolbenpumpe) über einen Saug-Druckschlauch 12, der z.B. über Schlauchtrommeln 11 oder Gleitkettenbahnen geführt ist.

Ein Ausbringwagen 8, der z.B. als Laufkatze auf der Brücke geführt wird und ebenfalls mittels Schrittmotoren angesteuert und positioniert werden kann, enthält eine Ausbringeinrichtung in Form eines Schleppschlauches 9, die mit ihm über eine Gleitkettenbahn 10 quer zu der Bewegungsrichtung der Brücke 1 verfahren werden kann. Am Ausbringwagen 8 oder parallel dazu kann eine Trageinrichtung 13 mitgeführt werden, die zur Aufnahme bzw. Befestigung von Messeinrichtungen 14, einer Kamera 15 o.ä. dient.

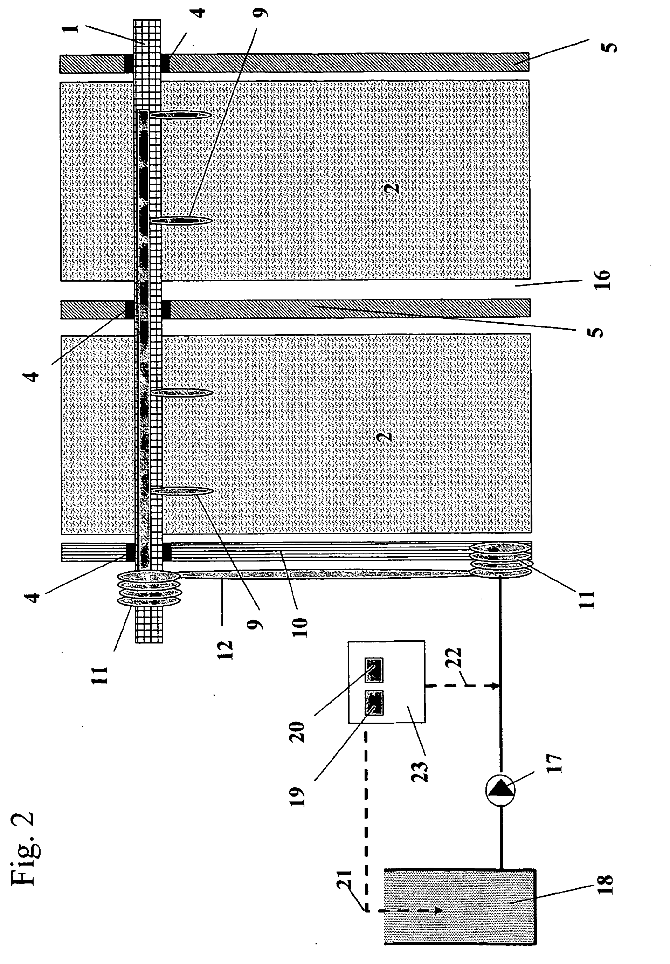

In **Fig. 2** ist ein weiteres Ausführungsbeispiel einer Vererdungsanlage in der Ansicht von oben dargestellt. Gezeigt ist eine Anlage, die aus zwei parallel zueinander angeordneten Vererdungsbeeten 2 besteht, die in der Mitte durch einen Mitteldamm 16 getrennt sind. Der Mitteldamm dient hier als zusätzlicher Auflagepunkt für die verfahrbare Brücke 1, so dass Räder 4, die hier als Stützräder dienen, z.B. in einer Laufmulde 5 auf dem Mitteldamm geführt werden. Die Brücke 1 überspannt beide Vererdungsbeete, wobei hier jedes Vererdungsbeet von einem eigenen System von Schleppschläuchen 9 beschlammt wird, die parallel zueinander versetzt von der Brücke mitgeführt werden. Die Schlammzuführung zur Brücke erfolgt mittels des Saug-Druckschlauchs 12, der z.B. über Gleitkettenbahnen 10 und Schlauchtrommeln 11 an der Beetlängsseite mitgeführt wird. Durch das gesteuerte Ziehen bzw. Wickeln des Saug-Druckschlauchs in Beetlängsrichtung kann gleichzeitig eine Bewegung der Brücke 1 in diese Richtung veranlasst werden. Die Zuleitung des Schlamms erfolgt mittels einer Dickschlammpumpe 17, z.B. aus einer Schlammvorlage 18. Die Zudosierung von Flockungsmitteln 19 oder Additiven 20 über eine Dosierstation 23 kann entweder wie bei 21 in die Schlammvorlage erfolgen oder wie bei 22 druckseitig in den Förderstrom der Dickschlammpumpe.

### BEZUGSZEICHENLISTE

- 1: Brücke
- 2: Vererdungsbeet
- 3: Fahrschemel
- 4: Rad
- 5: Laufmulde
- 6: Drainagegraben
- 7: Schrittmotor
- 8: Ausbringwagen
- 9: Schleppschlauch
- 10: Gleitkettenbahn
- 11: Schlauchtrommel
- 12: Saug-Druckschlauch
- 13: Trageinrichtung
- 14: Messeinrichtung
- 15: Kamera
- 16: Mitteldamm
- 17: Dickschlammpumpe
- 18: Schlammvorlage
- 19: Flockungsmittel
- 20: Additiv
- 21: Zudosierung in die Schlammvorlage
- 22: Zudosierung in den Förderstrom der Dickschlammpumpe
- 23: Dosierstation

## Patentansprüche

1. Verfahren zur Beschickung von Vererdungsanlagen mit Klärschlamm, wobei der Klärschlamm auf ein bepflanztes Vererdungsbeet (2) ausgebracht wird, wobei der Klärschlamm vor dem Ausbringen auf das Vererdungsbeet (3) eingedickt und/oder vorentwässert und/oder durch Flockungsmittel (19) konditioniert wird, **dadurch gekennzeichnet, dass** der Klärschlamm mit Hilfe mindestens eines von einer gegenüber dem Vererdungsbeet beweglichen Traverse oder Brücke herabhängenden Schleppschlauches (9), der in einer oder mehreren Achsen positionierbar zwischen in dem Vererdungsbeet (2) angeordneten Pflanzenreihen geführt wird, an in der Beetbreite und Beetlänge unterschiedlichen Stellen auf das Vererdungsbeet (2) ausgebracht wird.

2. Verfahren nach Anspruch 1, **dadurch gekennzeichnet, dass** das Entwässern des Klärschlamms mit Hilfe von Flockungsmitteln (19) auf der beweglichen Traverse oder Brücke (1) erfolgt.

3. Verfahren nach Anspruch 1 oder 2, **dadurch gekennzeichnet, dass** für das Aufbringen des Klärschlamms auf das Vererdungsbeet (2) mehrere parallel versetzte Schleppschläuche (9) verwendet werden.

4. Verfahren nach Anspruch 1 oder 2, **dadurch gekennzeichnet, dass** zum Positionieren des Schleppschlauchs (9) einerseits die Traverse oder Brücke (1) gegenüber dem Vererdungsbeet und andererseits ein Ausbringwagen (8) längs der Traverse oder Brücke (1) bewegt wird.

5. Vererdungsanlage mit einem bepflanzten Vererdungsbeet (2) und mit einer Beschickungsvorrichtung, die Klärschlamm auf das bepflanzte Vererdungsbeet (2) ausbringt, wobei die Beschickungsvorrichtung Konditioniereinrichtungen zum Eindicken und/oder Vorentwässem und/oder Konditionierung des Klärschlamms durch Flockungsmittel (19) vor dem Ausbringen auf das Vererdungsbeet (2) aufweist, **dadurch gekennzeichnet, dass** die Beschickungsvorrichtung weiterhin eine gegenüber dem Vererdungsbeet (2) bewegliche Traverse oder Brücke (1) und mindestens einen von der Brücke (1) oder Traverse herabhängender Schleppschlauch (9) zum Ausbringen des Klärschlamms an in der Beetbreite und Beetlänge unterschiedlichen Stellen auf das Vererdungsbeet (2) aufweist.

6. Vererdungsanlage nach Anspruch 5, **dadurch gekennzeichnet, dass** die Traverse oder Brücke (1) längs des Vererdungsbeets verfahrbar oder über dem Vererdungsbeet (2) verschwenkbar ist.

7. Vererdungsanlage nach Anspruch 5 oder 6, **dadurch gekennzeichnet, dass** der Schleppschlauch (9) mit einem Ausbringwagen (8) längs der Traverse oder Brücke (1) verfahrbar ist.

8. Vererdungsanlage nach einem der Ansprüche 5 bis 7, **dadurch gekennzeichnet, dass** die Konditionierungseinrichtungen auf der Traverse oder Brücke (1) angeordnet ist.

9. Vererdungsanlage nach einem der Ansprüche 5 bis 8, **dadurch gekennzeichnet, dass** an der Traverse oder Brücke (1) mindestens ein Bedachungselement zur Bedachung eines Teils des Vererdungsbeets (2) angebracht oder anbringbar ist.

## Claims

1. Method of feeding sewage sludge into a plant for producing humus, wherein the sewage sludge is applied on a planted humus producing bed (2), wherein the sewage sludge is thickened and/or pre-dewatered and/or conditioned by flocculation agents (19) prior to application on the humus producing bed (2), **characterized in that** the sewage sludge is applied by means of at least one towed hose (9) hanging from a traverse or bridge (1) moveable with regard to the humus producing bed, which is guided between the rows of plants arranged in the humus producing bed (2) as being positionable in the direction of one or more axes, at different places along the bed widths and along the bed lengths onto the humus producing bed (2).

2. Method according to claim 1, **characterized in that** the dewatering of the sewage sludge is effected by means of flocculation agents (19) on the moveable traverse or bridge (1).

3. Method according to claim 1 or 2, **characterized in that** several towed hoses (9) offset in parallel are used for applying the sewage sludge onto the humus producing bed (2).

4. Method according to claim 1 or 2, **characterized in that** the traverse or bridge (1) is moved with regard to the humus producing bed on the one hand, and a feeding carriage (8) is moved along the traverse or bridge (1) on the other hand for positioning the towed hose (9).

5. Plant for producing humus comprising a planted humus producing bed (2) and a feeding device which applies sewage sludge onto the planted humus producing bed (2), wherein the feeding device comprises conditioning equipment for thickening and/or pre-dewatering and/or conditioning the sewage sludge by means of flocculation agents (19) prior to application onto the humus producing bed (2), **characterized in that** the feeding device further comprises a traverse or bridge (1) which is moveable with regard to the humus producing bed (2) and at least one towed hose (9) hanging from the bridge (1) or traverse for applying the sewage sludge at different places along the bed width and along the bed length onto the humus producing bed (2).

6. Plant for producing humus according to claim 5, **characterized in that** the traverse or bridge (1) is moveable along the humus producing bed or pivotable above the humus producing bed (2).

7. Plant for producing humus according to claim 5 or 6, **characterized in that** the towed hose (9) is moveable along the traverse or bridge (1) by a feeding carriage (8).

8. Plant for producing humus according to any of the claims 5 to 7, **characterized in that** the conditioning equipment is arranged on the traverse or bridge (1).

9. Plant for producing humus according to any of the claims 5 to 8, **characterized in that** at least one roofing element for covering a part of the humus producing bed (2) is attached or attachable to the traverse or bridge (1).

## Revendications

1. Procédé d'alimentation d'installations de compostage, en boue d'épuration dans lequel, la boue d'épuration est répandue sur une plate-bande de compostage (2) plantée, la boue d'épuration étant, avant l'épandage, compactée sur la plate-bande de compostage (2) et/ou prédéshydratée et /ou conditionnée avec des moyens de flockage (19), **caractérisé en ce que** la boue d'épuration est répandue sur la plate-bande de compostage (2) en différents endroits dans la largeur et dans la longueur de la plate-bande, au moyen d'au moins un tuyau traîné, pendant d'une traverse ou d'un pont mobile par rapport à la plate-bande de compostage (2) qui peut être guidé, en étant positionné, dans un ou plusieurs axes entre les rangées de plantations disposées sur la plate-bande de compostage (2).

2. Procédé selon la revendication 1, **caractérisé en ce que** l'assèchement de la boue d'épuration s'effectue au moyen de produits de flockage (19) sur la traverse ou pont (1) mobile.

3. Procédé selon la revendication 1 ou 2, **caractérisé en ce que** pour l'épandage de la boue d'épuration sur la plate-bande de compostage (2), plusieurs tuyaux traînés (9) échelonnés parallèlement sont utilisés.

4. Procédé selon la revendication 1 ou 2, **caractérisé en ce que** pour positionner le tuyau traîné (9) d'une part la traverse ou pont (1) est amenée en face de la plate-bande de compostage et d'autre part un chariot d'épandage (8) est déplacé le long du pont (1).

5. Installation de compostage comportant une plate-bande de compostage (2) et un dispositif d'alimentation qui répand de la boue d'épuration sur la plate-bande de compostage (2), le dispositif d'alimentation présentant des installations de conditionnement pour compacter et/ou prédéshydrater et /ou conditionner la boue d'épuration par des moyens de flockage (19), **caractérisée en ce que** le dispositif d'alimentation présente de plus une traverse ou pont (1) mobile par rapport à la plate-bande de compostage (2) et au moins un tuyau traîné (9) pendant du pont (1) ou traverse pour répandre la boue d'épuration sur la plate-bande de compostage (2) en différents endroits dans la largeur et dans la longueur de la plate-bande.

6. Installation de compostage selon la revendication 5, **caractérisée en ce que** la traverse ou pont (1) est déplaçable le long de la plate-bande de compostage (2) ou basculable au-dessus de la plate-bande de compostage (2).

7. Installation de compostage selon la revendication 5 ou 6, **caractérisée en ce que** le tuyau traîné (9) est déplacé le long du pont (1) ou de la traverse au moyen d'un chariot d'épandage (8).

8. Installation de compostage selon l'une des revendications 5 à 7, **caractérisée en ce que** les installations de conditionnement sont disposées sur la traverse ou pont (1).

9. Installation de compostage selon l'une des revendications 5 à 8, **caractérisée en ce qu'**au moins un élément de couverture pour recouvrir une partie de la plate-bande de compostage (2)est monté ou peut être monté sur la traverse ou pont (1).
